# EUROPEAN PATENT APPLICATION

(11) **EP 2 876 536 A2**
(43) Date of publication of application: **27.05.2015**
(21) Application number: 14181341.0
(22) Date of filing: 19.08.2014
(51) Int. Cl.: G06F 3/0486, G06F 3/0481

(54) **Method of managing icons on a screen**

(30) Priority: 31.10.2013 TW 102139578
(71) Applicant: Synology Incorporated, Taipei 103 (TW)
(72) Inventor: Huang, Chih-Kuang, 821 Kaohsiung City (TW); Kao, Shi-Shiuan, 112 Taipei City (TW); Kuo, Jen-Wei, 247 New Taipei City (TW); Lin, Yi-Yu, 411 Taichung City (TW); Hung, Hsing-Hsing, 700 Tainan City (TW)
(74) Representative: Becker Kurig Straus

(57) **Abstract**

A method of managing icons is used on a screen of an electronic device which displays at least a first icon and a second icon. While dragging the first icon, the first and second icons are displayed on a first region of the screen and a group symbol is displayed on a second region of the screen. The first icon is dragged onto the group symbol and then released for creating a new group which contains the first icon. A group icon associated with the new group is then displayed on the second region of the screen.

## Description

### Field of the Invention

The present invention is related to a method of managing icons on a screen for creating new groups, adding group members, modifying group contents or creating icon shortcuts.

### Background of the Invention

When a user operates an electronic device, one or more icons representing applications programs or files are normally displayed on the desktop or a specific interface shown on the screen. Sometimes, there may be so many icons that the user needs to scroll between different pages to view all icons. For ease of operation, the icons may be grouped according to the corresponding file names, time or purposes. Each group may contain one or more icons.

In a prior art method of managing icons, the user may add a specific icon into a target group by dragging the specific icon onto a corresponding target group icon. However, this requires some manoeuvring when the specific icon and the target group icon are displayed on different pages of the screen, thereby causing inconvenience.

In a prior art method of managing icons, the user may create a new group containing the first icon and the second icon by dragging the first icon onto the second icon. However, when the user wants to create a new group which only contains the first icon, it is required to create a new group containing the first icon and another icon by dragging the first icon onto the another icon and then remove the another icon from the new group, thereby taking much time and causing inconvenience.

Therefore, there is a need for efficiently managing icons and directly creating an independent group for a single icon.

### Summary of the Invention

The present invention aims at providing a method of managing icons on a screen which can provides an efficient and easy way to create a new group, to add group member, to modify group content, or to create an icon shortcut.

This is achieved by methods of managing icons on a screen according to claims 1 and 13. The dependent claims pertain to corresponding further developments and improvements.

As will be seen more clearly from the detailed description following below, the claimed method of managing icons on a screen includes displaying a first icon and a second icon in a first region of the screen; displaying a first group symbol in a second region of the screen when the first icon is being dragged; creating a first group after the first icon has been dragged onto the first group symbol and dropped; and displaying a first group icon corresponding to the first group simultaneously in the first region and the second region and removing the first icon from the first region.

As will be seen more clearly from the detailed description following below, the claimed method of managing icons on a screen. includes displaying a specific interface comprising a first icon and a second icon; displaying a first preview image of a first target interface associated with the first icon when the first icon is being dragged; and creating a first shortcut of the first icon in at least one target interface by dragging the first icon onto the preview image and then dropping the first icon.

### Brief Description of the Drawings

In the following, the invention is further illustrated by way of example, taking reference to the accompanying drawings.

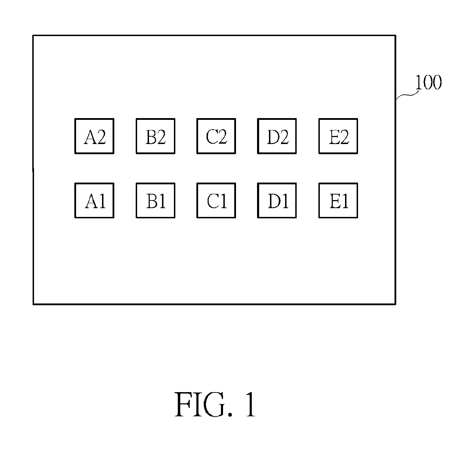

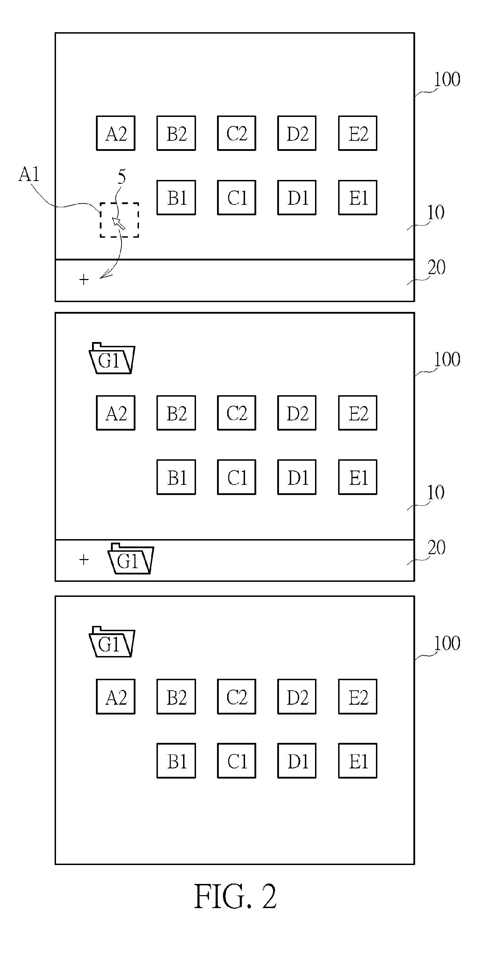

FIG. 1 is diagram illustrating a screen of an electronic device. FIGs. 2-10 are diagrams illustrating methods of managing icons according to embodiments of the present invention.

### Detailed Description

FIG. 1 is a diagram illustrating a screen 100 of an electronic device. After booting the electronic device, the screen 100 may show a desktop which includes a plurality of icons A1-E1 and A2-E2. Each icon may represent an application program or a file installed/stored in the electronic device. The user may execute an application program or open a file by selecting a corresponding icon. Meanwhile, the user may drag a specific icon using a mouse, a finger or a stylus in order to create a group for the specific icon, to add the specific icon in an existing group, to modify a group, or to create a corresponding shortcut at another interface.

FIGs. 2-10 are diagrams illustrating methods of managing icons according to embodiments of the present invention. When an icon is being dragged, any ungrouped icons (not members of any existing group) among the icons A1-E1 and A2-E2 and the group icons representing all existing groups are displayed in a first region 10 of the screen 100, while related group information is displayed in a second region 20 of the screen 100. The group information may include a group symbol "+" representative of creating new group or adding group member, a group symbol "X" representative of ungrouping operation, the group icons representing all existing groups, or the icons included in a specific group.

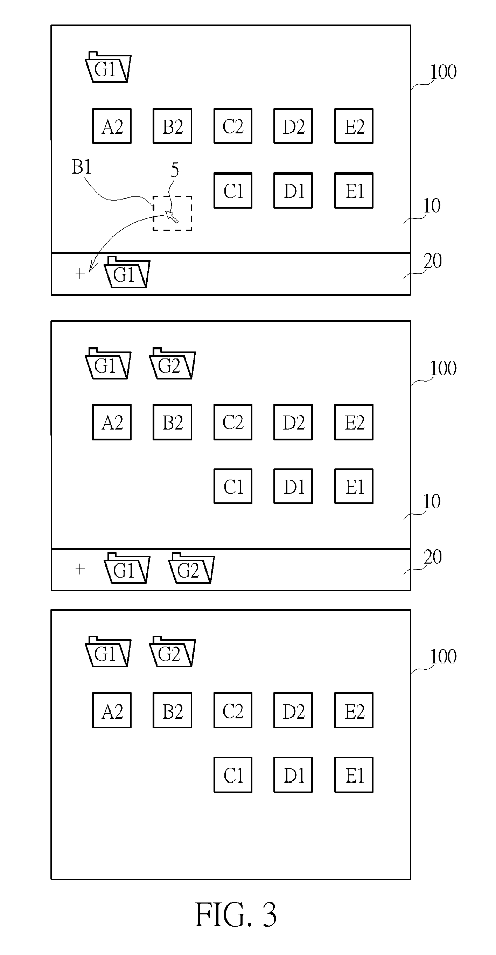

FIGs. 2 and 3 illustrate methods of creating a new group for a single icon according to embodiments of the present invention. Assuming that no group has been created for any icon displayed on the desktop, the user may want to create two groups for the icons A1 and B1, respectively. Once the user starts to drag the icon A1, the group symbol "+" may be displayed in the second region 20. If the user drags the icon A1 onto the group symbol "+" (represented by a cursor 5 and an arrow depicted on the top of FIG. 2) and then drops the icon A1 within a predetermined period, a new group containing the icon A1 may be created and a corresponding group icon G1 may thus be simultaneously displayed in the first region 10 and the second region 20, as depicted in the middle of FIG. 2. Similarly, the user may then drag the icon B1 onto the group symbol "+" (represented by a cursor 5 and an arrow depicted on the top of FIG. 3) and then drops the icon B1 within a predetermined period. A new group containing the icon B1 may be created and a corresponding group icon G2 and the existing group icon G1 may thus be simultaneously displayed in the first region 10 and the second region 20, as depicted in the middle of FIG. 3. When a predetermined time has elapsed after creating the groups, the display content of the second region 20 may be removed, as depicted at the bottom of FIGs. 2 and 3.

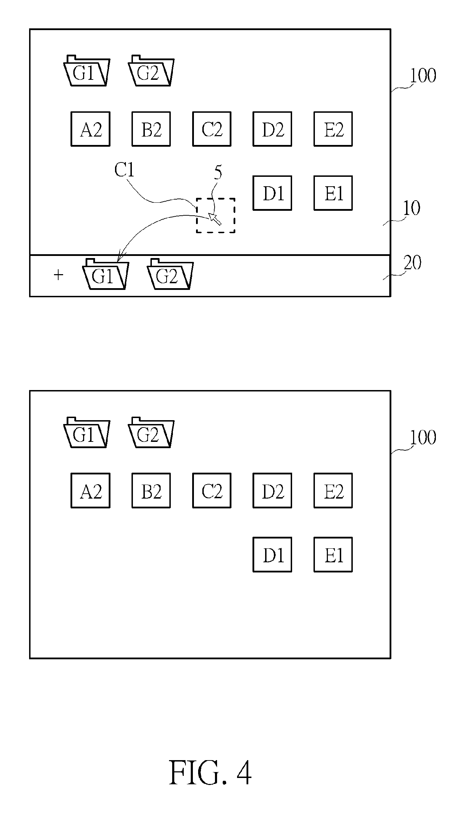

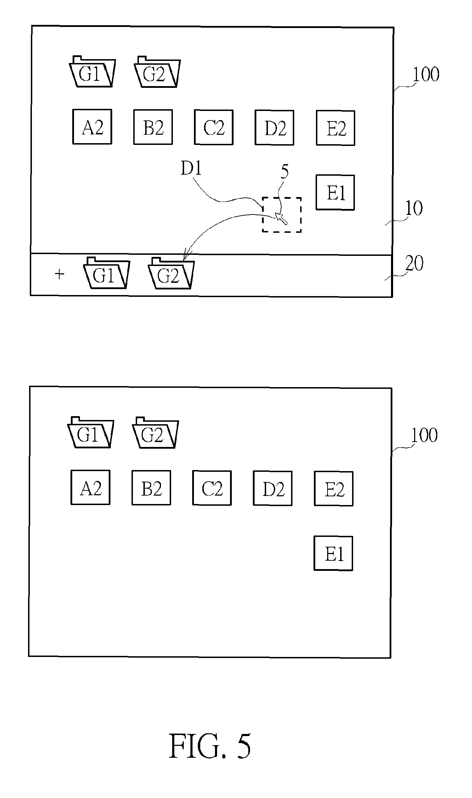

FIGs. 4 and 5 illustrate methods of adding icons into existing groups according to embodiments of the present invention. Assuming that two groups (such as those represented by the group icons G1 and G2) have been created for the icons displayed on the desktop, the user may want to add the icons C1 and D1 into existing groups. Once the user starts to drag the icon C1, the group symbol "+" and the group icons G1-G2 may be displayed in the second region 20. If the user drags the icon C1 onto the group icon G1 and then drops the icon C1 within a predetermined period, the icon C1 may be added into the group represented by the group icon G1, as depicted on the top of FIG. 4. Similarly, if the user drags the icon D1 onto the group icon G2 and then drops the icon D1 within a predetermined period, the icon D1 may be added into the group represented by the group icon G2, as depicted on the top of FIG. 5. When a predetermined time has elapsed after adding icons into existing groups, the display content of the second region 20 may be removed, as depicted at the bottom of FIGs. 4 and 5.

In the embodiments illustrated in FIGs. 4 and 5, the above-mentioned grouping operations may be performed by dragging an ungrouped icon displayed in the first region 10 onto a group icon displayed in the second region 20. In another embodiment of the present invention, the above-mentioned grouping operation may be performed by dragging an ungrouped icon displayed in the first region 10 onto a group icon displayed in the first region 10.

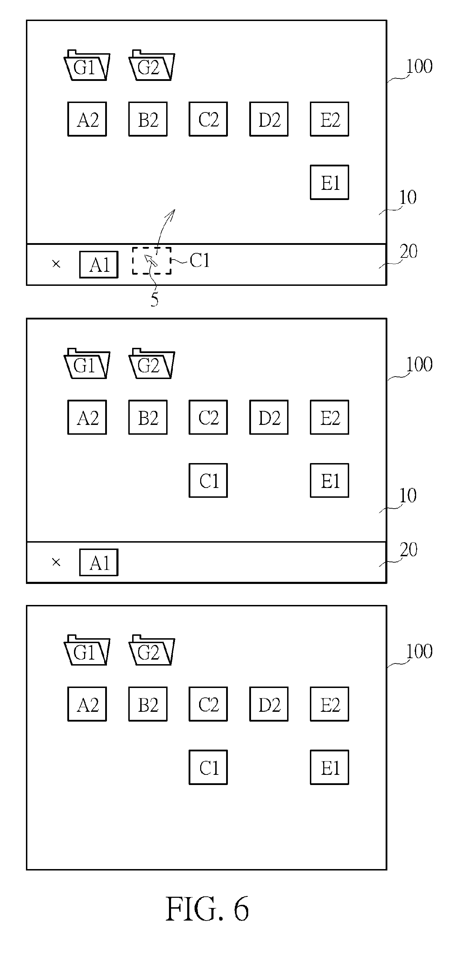

FIGs. 6-8 illustrate methods of modifying group contents according to embodiments of the present invention. After performing the method illustrated in FIG. 5, the group represented by the group icon G1 now includes the icons A1 and C1, and the group represented by the group icon G2 now includes the icons B1 and D1. In order to modify the group represented by the group icon G1, the user may select the group icon G1 displayed in the first region 10, thereby displaying all relevant group information in the second region 20, such as the group symbol "X" and the icons A1 and C1.

In the embodiment illustrated in FIG. 6, in order to remove the icon C1 from the group represented by the group icon G1, the user may drag the icon C1 from the second region 20 to the first region 10 (represented by a cursor 5 and an arrow depicted on the top of FIG. 6), thereby displaying the ungrouped icon C1 at its original location on the desktop, as depicted in the middle of FIG. 6. When a predetermined time has elapsed after modifying group contents, the display content of the second region 20 may be removed, as depicted at the bottom of FIG. 6.

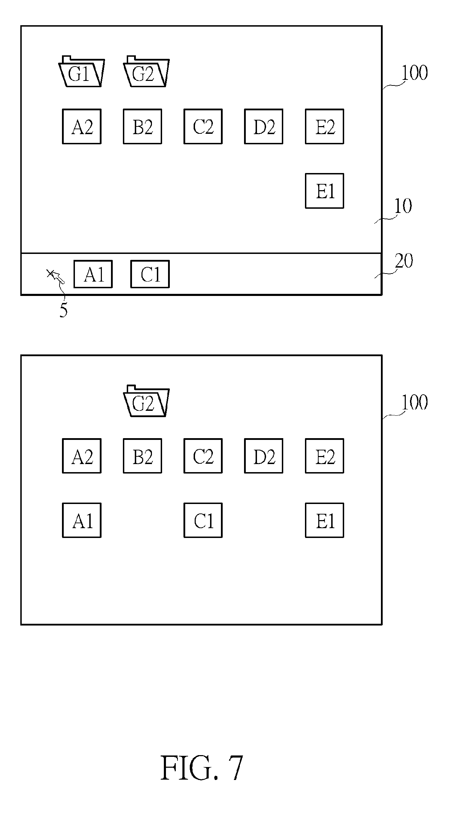

In the embodiment illustrated in FIG. 7, in order to ungroup the group represented by the group icon G1, the user may select the group symbol "X" (represented by a cursor 5 depicted on the top of FIG. 7), thereby displaying the ungrouped icons A1 and C1 at their original locations on the desktop and removing the group icon G1 from the first region 10, as depicted at the bottom of FIG. 7.

In the embodiments illustrated in FIGs. 6 and 7, an icon which has been ungrouped may be displayed at its original location on the desktop. However, the number and the display location of the icons on the desktop may vary with time or operation. Therefore, in another embodiment of the present invention, an icon which has been ungrouped may be displayed at a specific location on the desktop which is determined according to a predetermined rule, such as sorting by name, date or type.

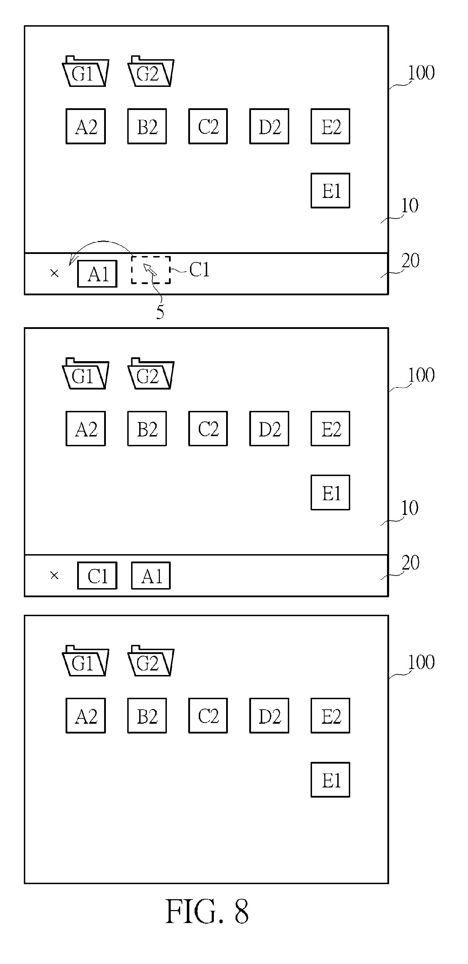

In the embodiment illustrated in FIG. 8, in order to adjust the display location of a specific icon in the group represented by the group icon G1, the user may drag the specific icon to a target display location (represented by a cursor 5 and an arrow depicted on the top of FIG. 8). The result after adjusting icon location is shown in the middle of FIG. 8. When a predetermined time has elapsed after modifying group contents, the display content of the second region 20 may be removed, as depicted at the bottom of FIG. 8.

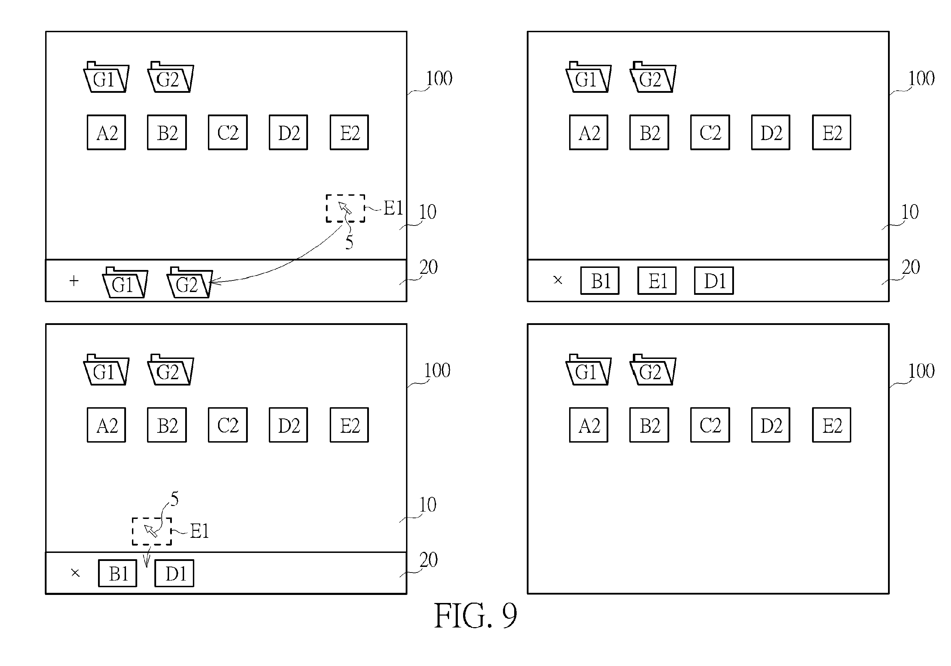

FIG. 9 illustrates a method of adding icons into existing groups and modifying group contents according to an embodiment of the present invention. Assuming that two groups (such as those represented by the group icons G1 and G2) have been created for the icons displayed on the desktop, the user may want to add the icon E1 into an existing group and edit the existing group immediately. Once the user starts to drag the icon E1, the group symbol "+" and the group icons G1-G2 may be displayed in the second region 20. If the user drags the icon E1 onto the group icon G2 (represented by a cursor 5 and an arrow depicted on the upper left of FIG. 9) without dropping the icon E1 for a predetermined period, relevant group information of the group icon G2 may be displayed in the second region 20, such as the group symbol "X and the icons B1 and D1, as depicted on the lower left of FIG. 9. Next, the user may continue to drag the icon E1 to a specific location in the group icon G2 (represented by a cursor 5 and an arrow depicted on the lower left of FIG. 9) without dropping the icon E1, as depicted on the lower left of FIG. 9. When the user drops the icon E1, the icon E1 may be added into the group represented by the group icon G2, and all icons B1, E1 and D1 may be displayed in the second region 20 according to the specific location, as depicted on the upper right of FIG. 9. After the above-mentioned grouping operation, the user may modify the group contents of the group icon G2 using the embodiments illustrated in FIGs. 6-8. When a predetermined time has elapsed after modifying group contents, the display content of the second region 20 may be removed, as depicted on the lower right of FIG. 9.

In the embodiment illustrated in FIG. 9, the above-mentioned grouping/modifying operation may be performed by dragging an ungrouped icon displayed in the first region 10 onto a group icon displayed in the second region 20. In another embodiment of the present invention, the above-mentioned grouping/modifying operation may be performed by dragging an ungrouped icon displayed in the first region 10 onto a group icon displayed in the first region 10.

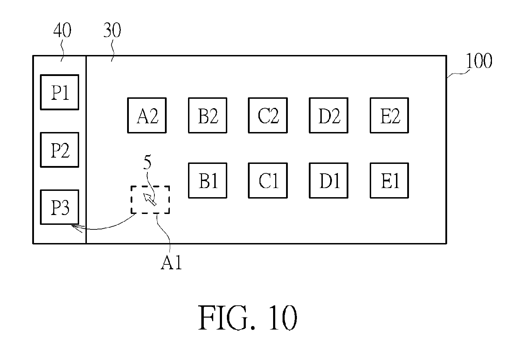

FIG. 10 is a diagram illustrating a method of managing icons according to an embodiment of the present invention. In this embodiment, a specific interface is displayed on the screen 100. When the user starts to drag the icon A1, the electronic device is configured to determine all target interfaces to which the shortcut of the icon A1 may be add. When the icon A1 is being dragged, the icons A1-E1 and A2-E2 are displayed in a third region 30 of the screen 100, while the preview images of all target interfaces are displayed in a fourth region 40 of the screen 100, such as the preview images of the target interfaces P1-P3. If the user drags the icon A1 onto the preview image of the target interface P1 (represented by a cursor 5 and an arrow depicted in FIG. 10) and then drops the icon A1 within a predetermined period, the shortcut of the icon A1 may be added to the target interface P3. If the user drags the icon A1 onto the preview image of the target interface P1 (represented by a cursor 5 and an arrow depicted in FIG. 10) without dropping the icon A1 for a predetermined period, the third region 30 may switch to display the target interface P3. The user may then drag the icon A1 to a specific location of the target interface P1 for creating the shortcut of the icon A1.

In the embodiments illustrated in FIGs. 1-10, the areas and relative locations of the first region 10, the second region 20, the third region 30 and the fourth region 40 are only for illustrative purpose, and do not limit the scope of the present invention. In an embodiment of the present invention, presenting the display content may be performed by gradually moving the display content into the second region 20 or the fourth region, and removing the display content may be performed by gradually moving the display contents out of the second region 20 or the fourth region. In another embodiment of the present invention, presenting the display content may be performed by gradually darkening the display content of the second region 20 or the fourth region, and removing the display content may be performed by gradually lightening the display content of the second region 20 or the fourth region.

In an embodiment of the present invention, the areas of the second region 20 and the fourth region 40 may be fixed so as to be able to simultaneously display one row of group icons or the preview images of one column of target interfaces. If the number of the group icons or the preview images exceeds the display area, a scroll control button may further be displayed in the second region 20 and the fourth region 40. When the user moves the cursor (which is dragging an icon) on the scroll control button, the second region 20 and the fourth region 40 may continue to display the next row of group icons or the preview images of the next column of target interfaces. Or, the user may keep the cursor (which is dragging an icon) on the edge of the second region 20 and the fourth region 40 for a predetermined period to achieve the same page scrolling function.

In another embodiment of the present invention, the areas of the second region 20 and the fourth region may be related to the number of the group icons or the preview images. More precisely, the areas of the second region 20 and the fourth region are larger when there are more group icons or the preview images to be displayed, and vice versa.

In the embodiments illustrated in FIGs. 1-10, the sizes, relative locations and the amount of the icons, group icons and target interfaces are only for illustrative purpose, and do not limit the scope of the present invention. In an embodiment of the present invention, the group icon may also display preview images of all icons in the group.

The present invention provides a method of managing icons on a screen in order to create a new group, to add group member, to modify group content, or to create icon shortcut. An independent group containing a single icon may be directly and easily created, thereby allowing the user to organize the icons. Relevant group information may be displayed when managing the icons, thereby allowing the user to perform corresponding operations. All target interfaces may be presented when creating icon shortcut, thereby allowing the user to add the shortcut of the same icon to different interfaces efficiently. The screen may switch to display different regions according to how long an icon stays dragged at a target location before being dropped, thereby providing an instinctive user environment. When the group icons or preview images to be displayed require multiple pages, the present invention provides the second region 20 or the fourth region 40 whose display content can be scrolled easily. Therefore, the present invention provides an efficient and easy way to create a new group, to add group member, to modify group content, or to create icon shortcut.

## Claims

1. A method of managing icons on a screen in which at least a first icon and a second icon are displayed in a first region of the screen, the method **characterized in that** it comprises the steps of:
displaying a first group symbol in a second region of the screen when the first icon is being dragged;
creating a first group after the first icon has been dragged onto the first group symbol and dropped; and
displaying a first group icon corresponding to the first group simultaneously in the first region and the second region and removing the first icon from the first region.

2. The method of claim 1, **further characterized by** comprising the further steps of:
selecting the first group icon displayed in the first region or the second region after creating the first group;
simultaneously displaying a second group symbol and the first icon in the second region;
ungrouping the first group by selecting the second group symbol; and
displaying the first icon in the first region and removing the first group icon from the first region.

3. The method of claim 1, **further characterized by** comprising the further steps of:
selecting the first group icon displayed in the first region or the second region after creating the first group;
simultaneously displaying a second group symbol and the first icon in the second region;
removing the first icon from the first group by dragging the first icon to the first region; and
displaying the first icon in the first region and removing the first icon from the second region.

4. The method of claim 1, **further characterized by** comprising the further steps of:
dragging the second icon after creating the first group;
simultaneously displaying the first group symbol and the first group icon in the second region while the second icon is being dragged;
adding the second icon into the first group by dragging the second icon onto the first group icon and then dropping the second icon within a predetermined period; and
removing the second icon from the first region.

5. The method of claim 1, **further characterized by** comprising the further steps of:
dragging the second icon after creating the first group;
simultaneously displaying the first group symbol and the first group icon in the second region while the second icon is being dragged;
dragging the second icon onto the first group icon;
switching the second region to display a second group symbol and the first icon when a period during which the second icon stays on the first group icon while being dragged is longer than a predetermined period;
adding the second icon into the first group be dragging the second icon to a specific location in the second region and then dropping the second icon; and
removing the second icon from the first region and displaying the second icon at the specific location in the second region after adding the second icon into the first group.

6. The method of claim 5, **further characterized by** comprising the further steps of:
ungrouping the first group by selecting the second group icon; and
displaying the first icon and the second icon in the first region and removing the first group icon from the first region.

7. The method of claim 5, **further characterized by** comprising the further steps of:
removing the first icon from the first group by dragging the first icon to the first region; and
displaying the first icon in the first region and removing the first icon from the second region.

8. The method of any of claims 5-7, **further characterized by** comprising the further step of:
adjusting a location of the first icon or the second icon displayed in the second region by dragging the first icon or the second icon.

9. The method of any of claims 1-8, **further characterized by** comprising the further step of:
removing a display content of the second region when a predetermined time has elapsed after creating the first group.

10. The method of claim 9, **characterized in that** removing the display content includes gradually lightening a color of the display content or gradually moving the display content out of the second region.

11. The method of any of claims 1-10, **characterized in that** displaying the first group symbol in the second region when the first icon is being dragged includes gradually darkening a color of the first group symbol or gradually moving the first group symbol into the second region when the first icon is being dragged.

12. The method of any of claims 1-11, **characterized in that** the first group icon is related to a preview image of the first icon.

13. A method of managing icons on a screen which displays a specific interface comprising a first icon and a second icon, the method **characterized in that** it comprises the steps of:
displaying a first preview image of a first target interface associated with the first icon when the first icon is being dragged; and
creating a first shortcut of the first icon in at least one target interface by dragging the first icon onto the preview image and then dropping the first icon.

14. The method of claim 13, **further characterized by** comprising the further steps of:
displaying a second preview image of a second target interface associated with the second icon when the second icon is being dragged
dragging the second icon to the second preview image;
switching the screen to display the second target interface when a period during which the second icon stays on the second preview image while being dragged is longer than a predetermined period; and
creating a second shortcut of the second icon in the second target interface by dragging the second icon to a specific location in the second target interface and then dropping the second icon.
